(19) Europäisches Patentamt / European Patent Office / Office européen des brevets

(11) **EP 4 644 026 A1**

(12) **EUROPEAN PATENT APPLICATION**

(43) Date of publication:
**05.11.2025   Bulletin 2025/45**

(21) Application number: 25173102.2

(22) Date of filing: **29.04.2025**

(51) International Patent Classification (IPC):
**B23D 53/00** (2006.01)      **B23D 53/02** (2006.01)
**B26D 1/46** (2006.01)       **B26D 3/00** (2006.01)
**B26D 5/00** (2006.01)       **B26D 7/22** (2006.01)
**B26D 5/02** (2006.01)       **B26F 3/12** (2006.01)

(52) Cooperative Patent Classification (CPC):
**B26D 1/46; B23D 53/00; B23D 53/023;
B26D 3/006; B26D 5/005; B26D 5/02;** B26D 7/22;
B26F 3/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **03.05.2024  IT 202400009922**

(71) Applicant: **Italian Cutting Systems Societa' A Responsabilita'
Limitata
70024 Gravina in Puglia (BA) (IT)**

(72) Inventor: **MARCHETTI, Fedele
70024 GRAVINA IN PUGLIA  BA (IT)**

(74) Representative: **Modiano, Micaela Nadia et al
Modiano & Partners
Via Meravigli, 16
20123 Milano (IT)**

(54) **CUTTING APPARATUS FOR PERFORMING LINEAR CUTS OF THE OBLIQUE OR VERTICAL TYPE AT LEAST ON A BLOCK OF POLYMERIC MATERIAL**

(57)   A cutting apparatus (10) for performing linear cuts of the oblique or vertical type at least on a block (90) of polymeric material, comprising: a worktable (12), adapted to support the block (90) to be cut; and a carrier member (14), configured to carry a cutting tool (16) designed to cut the block (90); the carrier member (14) defines a cutting axis (18) for the cutting tool (16) and is designed so that when the carrier member (14) carries the cutting tool (16), at least part of the cutting tool (16) extends along the cutting axis (18); the carrier member (14) can be tilted with respect to the worktable (12), so as to vary an angle of inclination (θ) of the cutting axis (18) with respect to the worktable (12).; the carrier member (14) is translatable along the cutting axis (18), so as to vary an axial position (w) of the carrier member (14) along the cutting axis (18); at least one of the worktable (12) and the carrier member (14) is movable along a movement direction (x1, x2) which is arranged angularly with respect to the cutting axis (18), so as to vary a distance (x) between the worktable (12) and the cutting axis (18) along the movement direction (x1, x2); at least one of the worktable (12) and the carrier member (14) is movable along a cutting direction (z1, z2) perpendicular to both the cutting axis (18) and the movement direction (x1, x2), in order to cut the block (90) along a cutting plane (γ) on which the cutting axis (18) lies.

Fig. 1

**Description**

The present invention relates to a cutting apparatus for performing linear cuts of the oblique or vertical type at least on a block of polymeric material.

The cutting apparatus according to the present invention is particularly, but not exclusively, useful and practical for cutting blocks of polymeric material, in particular of polyurethane foam. For example, the cutting apparatus according to the invention can be used to bevel blocks like the ones cited above and/or to produce flat sheets of various thicknesses from said blocks.

As is known, performing an oblique or vertical cut on blocks like the ones discussed above is a delicate operation that requires special technical measures.

Typically, known apparatuses for performing this type of cut comprise a worktable, adapted to support the block to be cut, and a carrier member, configured to carry an appropriate cutting tool. Usually, the cutting tool is a blade (for example, a band blade). The blade is conveniently inclined with respect to the worktable so as to affect the block to be cut along an inclined cutting axis. The cut is performed by translating the blade with respect to the block so as to pass through it.

However, known cutting apparatuses for performing linear cuts of the oblique or vertical type are far from optimized. Therefore, further contributions are needed in this technological field.

The aim of the present invention is to overcome the limitations and drawbacks of the background art, optimizing the execution of linear cuts of the oblique or vertical type on blocks such as those discussed above.

Within this aim, an object of the present invention is to obtain more precise linear cuts of the oblique or vertical type than those obtainable with known cutting apparatuses.

Another object of the present invention is to devise a cutting apparatus that is more versatile, capable of using a wide range of cutting geometries, in particular from bevels of different sizes and types to flat sheets of various thicknesses.

A further object of the present invention is to increase the safety of an operator assigned to cutting (in short: "operator") under any cutting condition.

A further object of the present invention is to conceive a cutting apparatus that is capable of automatically adjusting a cutting setup on the basis of the entry of a few simple input data.

A further object of the present invention is to devise a cutting apparatus that has a high degree of modularity. In this context, the present invention seeks to reconcile an inline production logic with one or more of the aim and objects discussed above.

Not the least object of the present invention is to provide a cutting apparatus that is highly reliable, relatively simple to provide, and economically competitive if compared with the background art.

This aim, as well as these and other objects that will become more apparent hereinafter, are achieved by a cutting apparatus according to claim 1.

The intended aim and objects are also achieved by the dependent claims.

Further characteristics and advantages of the present invention will become more apparent from the description of a preferred but not exclusive embodiment of the cutting apparatus according to the invention, illustrated by way of non-limiting example in the accompanying drawings, wherein:

Figure 1 is a schematic view of a cutting apparatus according to the present invention;
Figures 2 to 4 are three schematic views of three respective adjustments of a cutting apparatus according to the present invention;
Figure 5 is a side view of a cutting apparatus according to the present invention;
Figures 6 to 8 are, respectively, a front view (Figure 6), a top view (Figure 7) and a perspective view (Figure 8) of the cutting apparatus of Figure 5;
Figure 9 is a schematic view of a cutting operation performed by using the cutting apparatus of Figure 2;
Figure 10 is a schematic view of a cutting operation performed by using a particularly advanced embodiment of the cutting apparatus of Figure 5; and
Figure 11 is a detail view of Figure 10.

In the description of the preferred and illustrated embodiments, identical elements belonging to the same structure or functional group are designated by a reference numeral having the same numerical part.

With reference to the figures, each cutting apparatus according to the present invention, generally designated by the reference numeral 10, comprises a worktable 12 and a carrier member 14.

The worktable 12 is adapted to support a block 90 to be cut.

In particular, the block 90 is a block of material such as the ones described above.

In the preferred and illustrated embodiments, the block 90 has a rectangular profile, with a base Bw and a height Hw.

The carrier member 14 is configured to carry a cutting tool 16.

Preferably, the cutting tool 16 has a linear extension.

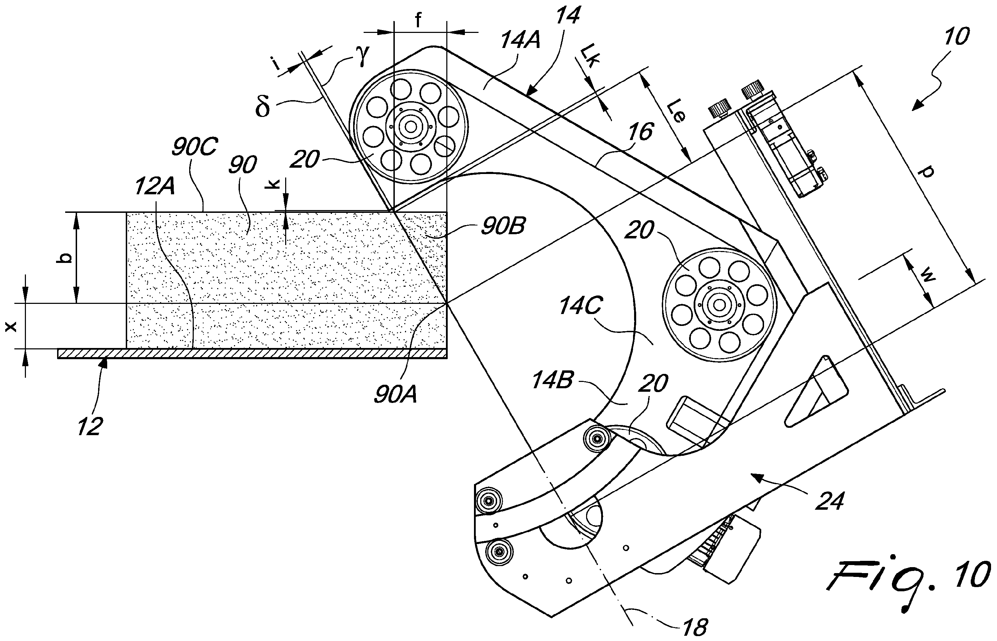

In some preferred embodiments, the cutting tool 16 is a blade. For example, in Figure 10 the cutting tool 16 is a band (or wire) blade. However, alternative embodiments are also conceivable in which the cutting tool 16 is another type of blade or, more generally, another cutting tool.

In the preferred embodiments that comprise the blade, the carrier member 14 constitutes a blade holder.

In particular, the carrier member 14 is designed to support the blade by virtue of suitable supporting means such as, for example, the pulleys (or flywheels) 20 shown in Figure 10.

The cutting tool 16 is designed to cut the block 90.

Preferably, the cutting tool 16 is integrated into the carrier member 14. However, alternative embodiments are also conceivable in which the cutting tool 16 is a component that is separate from the carrier member 14. In these alternative embodiments, the coupling between the cutting tool 16 and the carrier member 14 is performed manually by the operator before the cutting operation 10.

In each embodiment, the carrier member 14 forms a cutting axis 18 for the cutting tool 16.

More precisely, the carrier member 14 is designed so that when the carrier member 14 carries the cutting tool 16, at least part of the cutting tool 16 extends along the cutting axis 18.

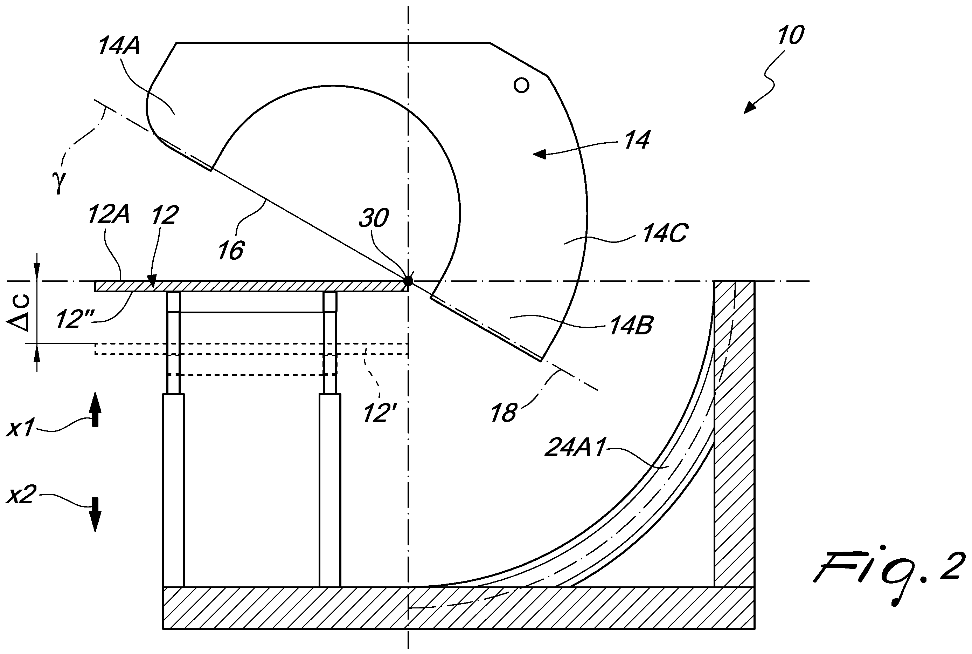

In practice, when the carrier member 14 carries the cutting tool 16, at least one part of the cutting tool 16 (in particular: a useful portion 16U, usable to perform the cut) lies along the cutting axis 18, for example in the way shown by Figures 2, 5, 9 and 10.

In the preferred and illustrated embodiments, the carrier member 14 is contoured in the shape of an arc, i.e., in a C-shape. However, alternative embodiments are also conceivable (but not shown) in which the carrier member 14 assumes alternative shapes (for example, H-like ones).

Preferably, the carrier member 14 comprises an outer casing 14C, which acts as a covering and/or protective element for one or more internal components of said carrier member 14.

In the preferred and illustrated embodiments, the carrier member 14 comprises a first end portion 14A and a second end portion 14B (i.e., two portions that give the carrier member 14 an arc-like or C-like shape).

In particular, the two end portions 14A and 14B are arranged so that they are both crossed by the cutting axis 18.

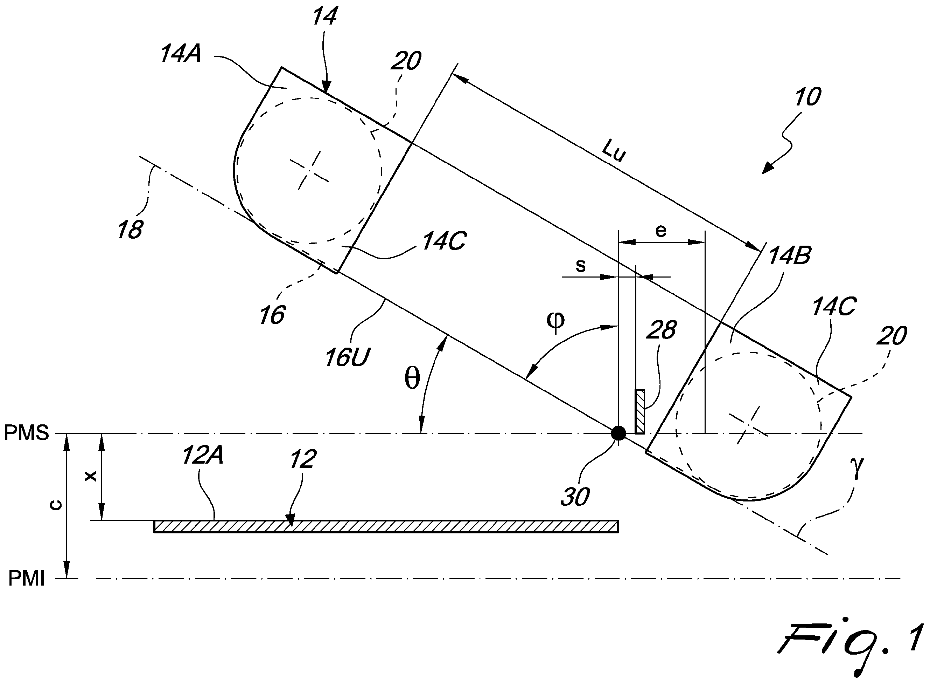

In some preferred embodiments, the first end portion 14A and the second end portion 14B form two respective arms of the outer casing 14C (see for example Figures 1, 5 and 10).

In each embodiment, the carrier member 14 can be tilted with respect to the worktable 12, so as to vary an angle of inclination θ of the cutting axis with respect to the worktable 12.

In particular, the carrier member 14 can be tilted between an operating position in which said angle of inclination θ assumes a first value and an operating position in which the angle of inclination θ assumes a second value, different from the first value.

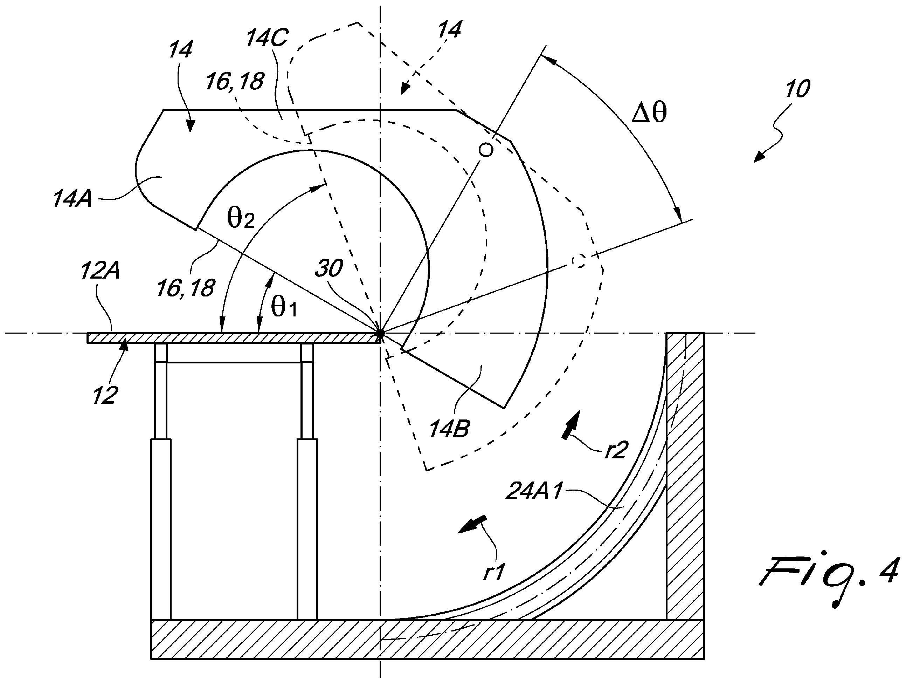

For example, in Figure 4, a variation Δθ identifies a variation of the angle θ that can be obtained either by rotating the carrier member 14 in the direction indicated by the arrow r1 (i.e., from an operating position in which the angle of inclination θ assumes a value θ1 to an operating position in which the angle of inclination θ assumes a value θ2), or vice versa (i.e., by rotating the carrier member 14 in the direction indicated by the arrow r2, from the operating position in which the angle of inclination θ assumes the value θ2 to the operating position in which the angle of inclination θ assumes the value θ1).

In some preferred embodiments, the carrier member 14 is of the tilting type.

In particular, the carrier member 14 is configured to rotate about an axis of rotation 30.

Preferably, the axis of rotation 30 is positioned so that at the end of the cutting of the block 90 said axis of rotation 30 coincides with a lower edge 90A of a beveled portion (or, more generally, of a sectioned portion) of said block 90.

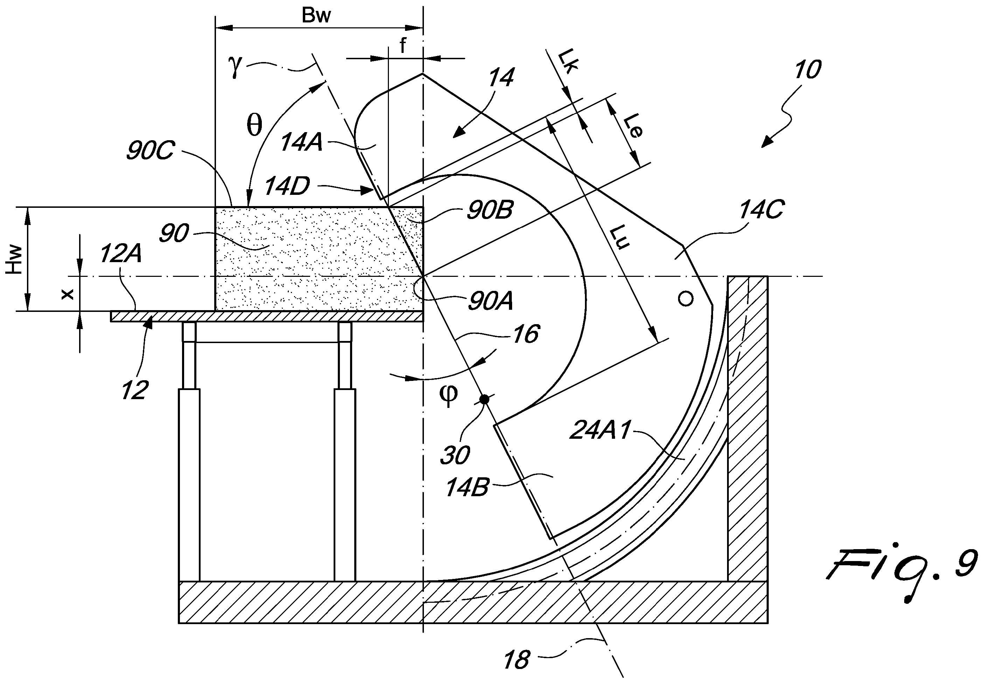

In practice, during a cutting operation, the axis of rotation 30 can be at a so-called "stop" (or base) of a piece of scrap 90B, where "scrap" means a portion of material that is to be cut, and therefore removed, from the rest of the block 90. Consequently, at the end of the cut, the lower edge 90A is positioned at a distance x with respect to an upper surface 12A of the worktable 12, as shown for example by Figures 9 and 10.

Advantageously, the carrier member 14 is translatable along the cutting axis 18, so as to vary an axial position w of said carrier member 14 along the cutting axis 18.

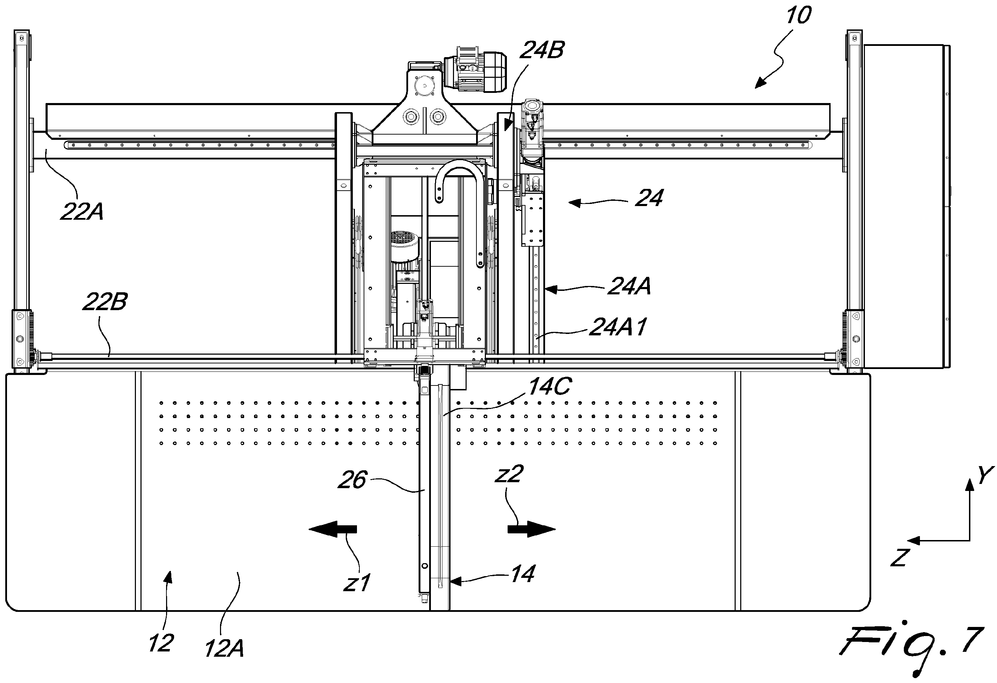

In particular, the cutting apparatus 10 comprises a linear guide 26 (see for example Figure 7), and the carrier member 14 is configured to slide back and forth, in a selective manner, along the linear guide 26.

In practice, the carrier member 14 can be translated between an operating position in which said axial position w assumes a first value and an operating position in which said axial position w assumes a second value, different from the first value.

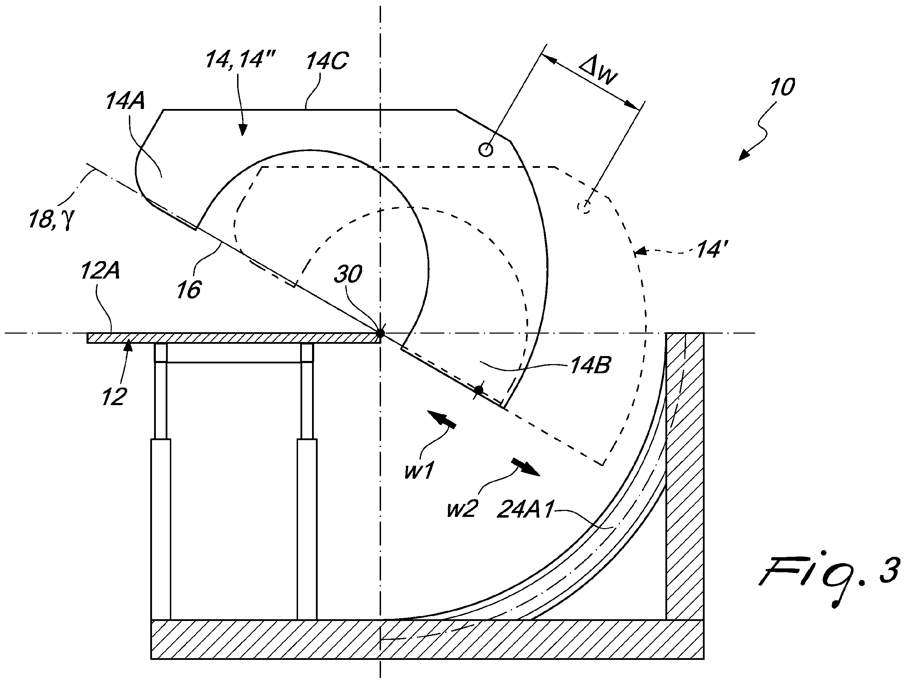

For example, in Figure 3, Δw identifies a variation in the axial position w obtainable by translating the carrier member 14 in the direction indicated by the arrow w1 (that is, from an operating position shown by means of a dashed-line profile 14' to an operating position shown by a solid-line profile 14"), or vice versa (i.e., by translating the carrier member 14 in the direction indicated by the arrow w2, from the operating position shown by the solid-line profile 14" to the operating position shown by the dashed-line profile 14').

The axial position w of the carrier member 14 can vary within the limits of a maximum range p (see, for example, Figure 10).

The possibility of translating the carrier member 14 along the cutting axis 18 (i.e., along a directrix of the cutting tool 16) is particularly advantageous when the carrier member 14 is of the tilting type. In this way, it is possible to obtain a tilting structure, which can be oriented safely according to a specific cutting geometry to be obtained.

In some preferred embodiments, the cutting apparatus 10 furthermore comprises a retractable side 28 (see for example Figure 1).

When the cutting apparatus 10 is in manual mode, the retractable side 28 can be moved selectively away from or towards the axis of rotation 30.

In particular, the retractable side 28 can be moved within the limits of a maximum range and according to an adjustment displacement s (see, for example, Figure 1).

In each embodiment, at least one of the worktable 12 and the carrier member 14 can be moved along a movement direction that is arranged angularly with respect to the cutting axis 18, so as to vary a distance between the worktable 12 and the cutting axis 18 along this same movement direction.

In the preferred and illustrated embodiments, the movement direction corresponds to any of the directions indicated by the arrows x1 and x2 (see Figure 2), while the distance between the worktable 12 and the cutting axis 18 (measured along this same movement direction) corresponds to the distance x mentioned above (see Figures 1, 9 and 10).

In particular, the movement direction x1, x2 is a vertical direction.

In practice, the distance x corresponds to the height of a so-called "shoulder" of the block 90, that is, of that part of the material (underlying the "stop") designed to remain in the block 90 even after the cutting operation.

The possibility of moving the worktable 12 and the carrier member 14 mutually apart along the movement direction x1, x2 is particularly (but not exclusively) useful and practical for increasing operator safety at the end of the cutting operation, since it allows to move the part of block 90 that contains said shoulder away from the carrier member 14 without exposing the operator to the cutting tool 16.

In some preferred embodiments, the worktable 12 can be moved with respect to the carrier member 14 along the movement direction x1, x2. In other words, the worktable 12 can be adjusted in height (in particular, upward and/or downward).

In the preferred and illustrated embodiments, the worktable 12 is configured to move, according to a stroke c, between a lower dead center PMI and an upper dead center PMS.

For example, in Figure 2, ∆c identifies a change in height of the worktable 12. This change in height can be obtained either by moving the worktable 12 in the direction indicated by the arrow x1 (i.e., from an operating position shown by a dashed-line profile 12' to an operating position shown by a solid-line profile 12"), or by moving the worktable 12 in the direction indicated by the arrow x2 (i.e., from the operating position shown by the solid-line profile 12" to the operating position shown by the dashed-line profile 12').

In practice, raising/lowering the worktable 12 determines the height of the shoulder of the block 90 to be beveled/cut. In other words, in the preferred and illustrated embodiments, the distance x coincides with the height of the portion of the block 90 that is not affected by the bevel/cut (see for example Figure 9).

In addition or alternatively, the carrier member 14 can be moved with respect to the worktable 12 along the movement direction x1, x2.

In practice, in particularly advanced embodiments the carrier member 14 also can be adjusted in height.

In each embodiment, at least one of the worktable 12 and the carrier member 14 can be moved along a cutting direction which is perpendicular to both the cutting axis 18 and the movement direction x1, x2, in order to cut the block 90 along a cutting plane γ on which the cutting axis 18 lies.

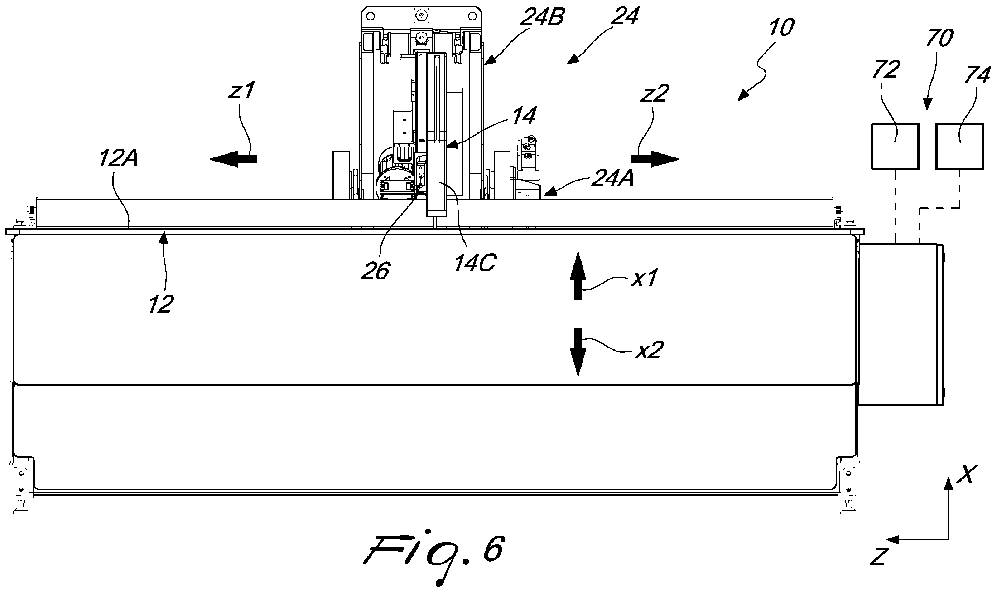

In the preferred and illustrated embodiments, the cutting direction corresponds to any of the directions indicated by the arrows z1 and z2 (see Figures 6 and 7).

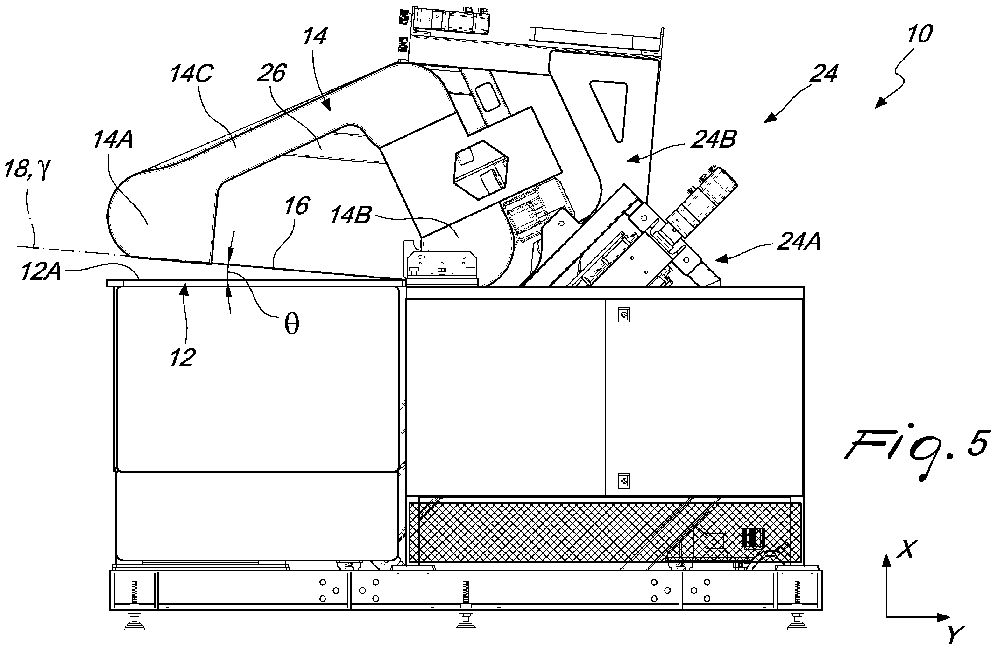

In practice, with reference to a set of three Cartesian axes X, Y and Z like those shown in Figures 5 to 8:

- the movement direction x1, x2 is either parallel to or coincident with the X axis;
- the angle of inclination θ lies on a plane which is parallel to or coincides with the one formed by the X and Y axes; and
- the cutting direction z1, z2 is parallel to or coincides with the Z axis.

In particularly advanced preferred embodiments (which are however not shown), at least part of the worktable 12 (in particular: at least the upper surface 12A) is further movable along the cutting direction z1, z2. For example, the worktable may comprise a conveyor belt (which forms the upper surface 12A) adapted to move the block 90 to be cut along the cutting direction z1, z2.

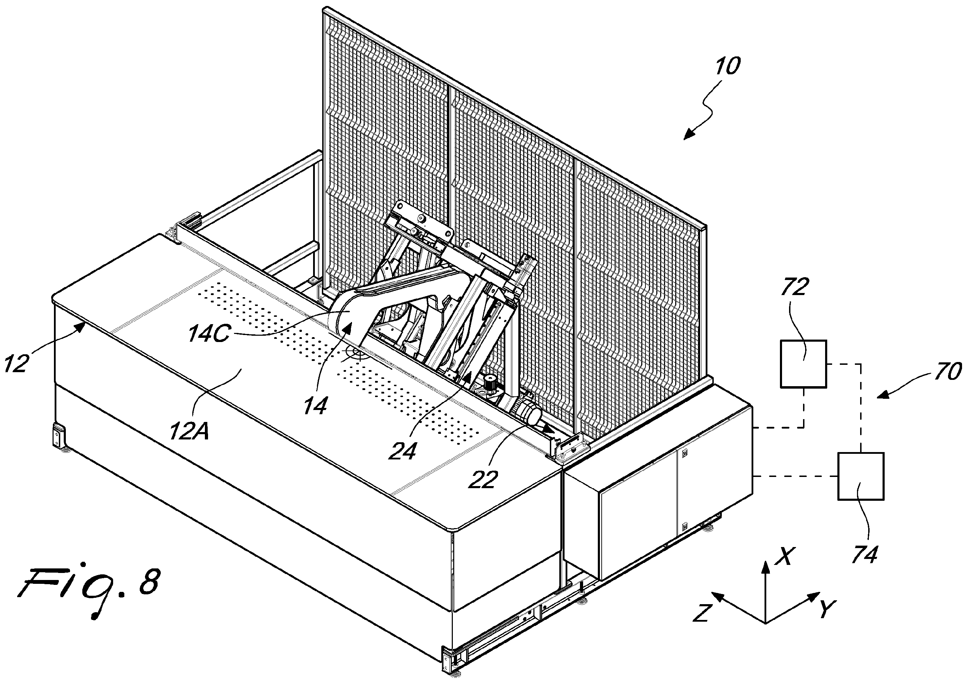

In some preferred embodiments, the cutting apparatus 10 further comprises a guiding assembly 22 configured to guide the carrier member 14 along the cutting direction z1, z2 (see for example Figure 8).

In the preferred and illustrated embodiments, the guiding assembly 22 comprises a pair of rails 22A, 22B that extend parallel to the worktable 12 along the cutting direction z1, z2.

In particular, the cutting apparatus 10 comprises a bridge-like structure 24, which supports the carrier member 14, and the bridge-like structure 24 is configured to slide along the rails 22A and 22B (see for example Figure 7).

Preferably, the bridge-like structure 24 comprises a lower bridge 24A and an upper bridge 24B, which can slide with respect to the lower bridge 24A.

In the preferred and illustrated embodiments, the lower bridge 24A comprises a (fixed) circular guide 24A1 and the upper bridge 24B is configured to slide with respect to the circular guide 24A1 (see for example Figures 2 to 5). This sliding movement can be provided by means of a suitable system of wheels or sliders (not shown).

In practice, in the illustrated preferred embodiments, the upper bridge 24B and the lower bridge 24A provide a slotted-link kinematic system.

Moreover, the upper bridge 24B is integral with the carrier member 14. Consequently, when the upper bridge 24B moves, the carrier member 14 moves in accordance with the movement of the upper bridge 24B.

In practice, in Figure 4 the variation $\Delta\theta$ can be obtained by sliding the upper bridge 24B with respect to the circular guide 24A1.

Preferably, the circular guide 24A1 is shaped like a circular arc that has the axis of rotation 30 as its center.

In practice, when the upper bridge 24B slides with respect to the circular guide 24A1, said upper bridge 24B tilts, dragging the carrier member 14 with it, and the axis of rotation 30 coincides with an axis of instantaneous rotation of the upper bridge 24B. Consequently, the circular guide 24A1 and the upper bridge 24B allow to rotate the carrier member 14 precisely.

In some preferred embodiments, the cutting apparatus 10 further comprises an adjustment device 70 (see for example Figures 6 and 8).

The adjustment device 70 is configured to receive cutting parameters related to the block 90 to be cut.

Moreover, the adjustment device 70 is configured to adjust at least one (preferably, all) of the inclination angle $\theta$, the axial position w and the distance x automatically, on the basis of said cutting parameters.

In the preferred and illustrated embodiments, the adjustment device 70 comprises an input periphery 72 and an electronic control unit (i.e., an actuation control unit) 74 (see for example Figures 6 and 8).

The input periphery 72 is configured to set said cutting parameters (i.e., cutting parameters related to the block 90 to be cut).

In particular, the cutting parameters are selected from the following parameters Bw, Hw, b, f, $\varphi$, Le, where:

- Bw and Hw have already been discussed above (see for example Figure 9);
- b represents the height of the scrap 90B (i.e., the height of the portion of material to be removed from the block 90) (see for example Figure 10);
- f represents the width of the scrap 90B (see for example Figures 9 and 10);
- $\varphi$, known as "complementary cutting angle" or "bevel angle" of the block 90, represents the inclination of the cutting axis 18 (and/or of the cutting tool 16) with respect to a vertical reference axis (see, for example, Figures 1 and 9); and
- Le, known as "effective length", represents the length of an effective portion 17, where "effective portion" means a part of the cutting axis 18 (and/or of the cutting tool 16) designed to intersect the block 90 during the cutting operation of said block 90 (see for example Figures 9, 10 and 11).

In other words, the effective length Le represents a mark that the cutting axis 18 (or, more generally, the respective cutting plane $\gamma$) is designed to leave on the block 90 when cutting said block 90.

Preferably, the width f is measured parallel to the length of the base Bw.

In particularly preferred embodiments, the cutting parameters are the height Hw, the height b and the width f. However, alternative embodiments are also conceivable in which the cutting parameters are different from Hw, band f. In fact, the parameters Bw, Hw, b, f, $\varphi$ and Le are related to each other by trigonometric relationships of a known type or, in any case, by geometric relationships that can be directly and unequivocally derived from the cited figures. By way of example, the value of b can be calculated as the difference between Hw and x. As a further example, the value of the complementary cutting angle $\varphi$ can be calculated as the arctangent of the ratio between f and b. Or moreover, the value of Le can be calculated as the square root of the sum of the square of b and the square of f.

The input periphery 72 (Figures 6 and 8) can be implemented in various ways, for example by means of a keyboard or a touch screen where the operator can enter (manually) the cutting parameters.

Preferably, the input periphery 72 is integral with the cutting apparatus 10. However, more advanced embodiments are also conceivable, in which the input periphery 72 is implemented in a separate electronic device (such as, for example, a PC, a tablet or a smartphone, in wired or wireless connection with the electronic control unit 74).

The electronic control unit 74 (i.e., an actuation control unit) is configured to vary one or more (and, preferably, all) of the inclination angle $\theta$, the axial position w and the distance x, based on said cutting parameters.

In practice, the electronic control unit 74 is functionally connected to the input periphery 72 (see for example Figures 6 and 8).

In some preferred embodiments, the adjustment device 70 (in particular, the actuation control unit 74) is configured to vary the axial position w (i.e., the position of the carrier member 14 along the cutting axis 18) so as to separate the carrier member 14 from the block 90 according to a preset clearance k.

In this way, the adjustment device 70 allows the carrier member 14 to be arranged in an optimal cutting position in order to minimize exposure of the cutting tool 16 while the block 90 is being cut.

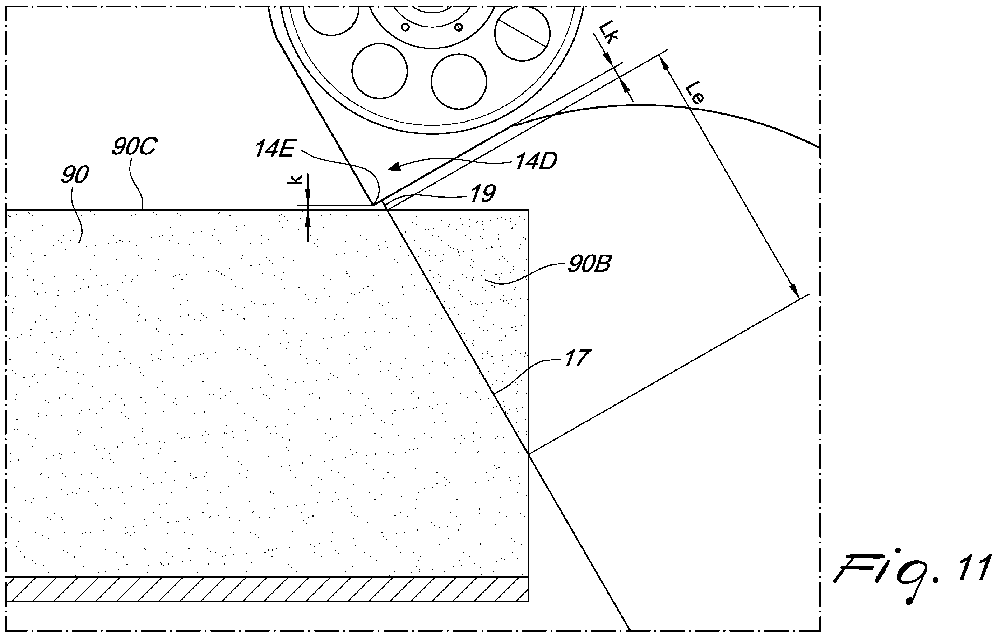

In practice, the preset clearance k expresses a minimum (non-zero) distance between a specific surface 90C of the block 90 to be cut and an end portion 14D (of the carrier member 14) that faces this specific surface 90C (see for example Figure 11).

In the preferred and illustrated embodiments, the surface 90C is an upper surface of the block 90, while the end portion 14D is a portion of the carrier member 14 that comprises a lower end 14E of the carrier member 14 (see for example Figure 11).

In practice, the lower end 14E is designed to face the block 90 to be cut.

For example, in Figure 11 the lower end 14E is a vertex (an edge) of the first arm 14 pointing towards the upper surface 90C. In other words, the lower end 14E is part of the outer casing 14C.

In practice, the presence of the preset clearance k prevents any collision between the outer casing 14C and the surface 90C of the block 90.

Advantageously, the preset clearance k can be dimensioned to prevent the passage of an operator's hand in the space that separates the outer casing 14C from said upper surface 90C. In this way, during the cutting of the block 90 the risk of contacts between the cutting tool 16 and the operator's hand is reduced significantly.

Preferably, the preset clearance k is comprised between 3 and 5 mm. Even more preferably, the preset clearance k is 4 mm. In this way, such risk is minimized while avoiding any collision between the outer casing 14C and the surface 90C.

In particularly advantageous preferred embodiments, the adjustment device 70 (in particular, the actuation control unit 74) is configured to vary the axial position w of the carrier member 14 so as to minimize the length Lk of an excess portion 19 of the cutting axis 18 (and/or of the cutting tool 16) (see for example Figure 11).

In practice, the excess portion 19 corresponds to a portion of the cutting axis 18 (and/or of the cutting tool 16) that is designed to remain exposed even when cutting the block 90.

In the preferred and illustrated embodiments, the excess portion 19 corresponds to the part of the cutting tool 16 that by protruding from the end portion 14D (i.e., the first end portion 14A), extends between this specific portion of the carrier member and the upper surface 90C of the block 90 (see for example Figure 11). In practice, during the cutting of the block 90, the presence of the preset clearance k prevents the operator from coming into contact with the excess portion 19.

In particularly advantageous preferred embodiments, the adjustment device 70 (in particular: the actuation control unit 74 visible in Figures 6 and 8) is configured to adjust the length Lk (in particular, reducing this latter length) on the basis of preset design parameters.

In practice, the design parameters are set during the installation of the cutting apparatus 10, for example by means of the input periphery 72.

Preferably, the design parameters comprise (or correspond to) the preset clearance k and a protrusion length i.

In particular, the protrusion length i expresses a maximum transverse space occupation of the end portion 14D.

In practice, the protrusion length i corresponds to a machine footprint parameter.

In the preferred and illustrated embodiments, the protrusion length i expresses a maximum distance (measured at right angles to the cutting axis 18) between the cutting axis 18 and a plane $\delta$ (which is parallel to the cutting axis 18) on which the lower end 14E lies. In other words, the protrusion length i indicates the distance between the planes $\gamma$ and $\delta$ (see for example Figure 10).

In practice, the adjustment device 70 is configured to calculate the length Lk as a function of two parameters (k and i) that take into account the space occupation of the outer casing 14C, in order to prevent any collision between the outer casing 14C and the upper surface 90C.

For example, the adjustment device 70 (in particular, the actuation control unit 74) can be configured to vary the axial position w (of the carrier member 14) based on a method comprising the steps m1, m2 and m3 discussed hereinafter.

In step m1, the effective length Le is calculated based on the parameters f and b (which, as mentioned, represent the width and height of the scrap 90B, respectively).

In step m2, the length Lk (i.e., the length of the excess portion 19) is calculated according to the parameter f, the angle of inclination $\theta$, and the protrusion length i. In practice, in step m2 the length Lk is calculated so as to prevent any unwanted interpenetration between the carrier member 14 and the block 90.

In step m3, the carrier member 14 is translated along the cutting axis 18, so as to leave exposed a (specific) portion of the cutting tool 16. This (specific) exposed portion has a length equal to the sum of the effective length Le (calculated in step m1) and the length Lk (calculated in step m2).

In the preferred and illustrated embodiments, the portion of the cutting tool 16 that is left exposed during step m3 is formed by the union of the effective portion 17 and the excess portion 19 (see for example Figures 9 and 11).

In practice, in step m3 the carrier member 14 is moved (forward or backward) along the cutting axis 18, so as to minimize the exposure of the cutting tool 16 during the cutting of the block 90.

Consequently, steps m1 to m3 ensure that during the cutting of the block 90 the only portion of the cutting tool to which the operator is potentially exposed is the excess portion 19.

For example, when steps m1 and/or m2 are performed while the cutting tool 16 is in a position of maximum exposure (that is, in an operating position in which the cutting tool 16 is completely visible to the operator), step m3 may consist in moving back the cutting tool 16 along the cutting axis 18 by an amount Q calculated as follows:

$$Q = Lu\text{-}Lk\text{-}Le$$

where:

- "Lu" identifies the so-called "useful length" of the cutting axis 18 (i.e., the maximum length of a portion of the cutting axis that can be used to perform a linear cut like the ones described above);
- "Lk" is the length (of the excess portion 19) calculated in step m2; and
- "Le" is the effective length calculated in step m1.

In the preferred and illustrated embodiments, the useful length Lu identifies a portion of the cutting axis 18 (and/or of the cutting tool 16) that extends between the first end portion 14A and the second end portion 14B (see for example Figures 1 and 9).

In practice, the quantity Q expresses the length of a portion of the cutting tool 18 that is designed to remain hidden while cutting the block 90.

In any case, the sequence of steps m1 to m3 can also be performed starting from a condition in which the cutting tool 16 is in an operating position other than the maximum exposure position (for example: due to a previous cut on another block). In other words, during steps m1 and/or m2, the cutting tool 16 can also be in an intermediate operating position, comprised between a minimum exposure position (in which the cutting tool 16 is completely hidden from the operator) and the maximum exposure position.

In practice, the adjustment device 70 is configured to minimize the length Lk regardless of the starting position of the cutting tool 16, on the basis of appropriate cutting and machine footprint parameters.

In the embodiments in which the cutting tool 16 is a blade, the maximum exposure position corresponds to a condition of use in which the blade is fully exposed; conversely, the minimum exposure position corresponds to a condition of use in which the blade is fully concealed.

In practice, in the embodiments that comprise the input periphery 72 and the actuation control unit 74 (see for example Figures 6 and 8), the entry of specific cutting parameters in the input periphery 72 allows to define the geometry of the cut (or bevel) to be provided. These specific cutting parameters are then processed by the actuation control unit 74, which arranges the carrier member 14 according to an optimal cutting configuration for performing a desired cut. Consequently, an input periphery and an actuation control unit such as those described above result in an automatic adjustment device that allows the cutting axis 18 to be optimally positioned to cut the block 90 according to a desired cutting profile starting from the (manual) entry of simple cutting parameters.

Advantageously, it is possible to configure the desired cutting configuration by entering just three cutting parameters, i.e., the height Hw and the cutting parameters band f.

The operation of the cutting apparatus 10 is clear and evident from what has been described.

Essentially, the carrier member 14 tilts according to the cut (or bevel) to be provided on the block 90 (see for example Figure 4); moreover, the carrier member 14 translates along the cutting axis 18 (in particular, moving backwards on the linear guide 26, for example in the manner shown by Figure 3), in order to minimize the protrusion of the excess portion 19. Consequently, the translation of the carrier member 14 along the cutting axis 18 allows to leave exposed, with respect to the worktable 12, only that portion of the cutting tool that is strictly necessary to obtain the desired cutting geometry, increasing the operator's safety during the cutting of the block 90.

The cutting apparatus 10 can be designed with interchangeable blocks, so as to obtain a modular structure conceived to adapt to the various production requirements.

In particular, the worktable 12, the carrier member 14 and the carriage 24 can be assembled according to a plurality of mutually different configurations, appropriately designed as a function of a specific processing system in which the cutting apparatus 10 is intended to be integrated.

For example, the cutting apparatus 10 can be part of an in-line or island processing system of the automatic, semi-automatic or manual type, etc.

It has been found that the present invention fully achieves the intended aims and objects. In particular, it has been shown that the cutting apparatus thus conceived allows to exceed the qualitative limits of the background art, since the combination of its three adjustment movements allows a wide range of cutting geometries to be utilized, from bevels of different sizes and types to flat sheets of various thicknesses.

Although the cutting apparatus according to the invention has been conceived to cut blocks of polymeric material, it can be used anyway more generally to cut other types of material.

The invention thus conceived is susceptible of numerous modifications and variations, all of which are within the scope of the accompanying claims.

Unless otherwise specified, the various embodiments described above can be combined to provide further and/or alternative embodiments. In addition, the present description covers combinations of preferred embodiments and variants not explicitly described.

All the details may furthermore be replaced with other technically equivalent elements.

In practice, the materials used, so long as they are compatible with the specific use, as well as the contingent shapes and dimensions, may be any according to the requirements and the state of the art.

To conclude, the scope of the protection of the claims must not be limited by the illustrations or preferred embodiments shown in the description by way of example, but rather the claims must comprise all the characteristics of patentable novelty that reside in the present invention, including all the characteristics that would be treated as equivalents by the person skilled in the art.

The disclosures in Italian Patent Application No. 102024000009922 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. A cutting apparatus (10) for performing linear cuts of the oblique or vertical type at least on a block (90) of polymeric material, in particular polyurethane foam, said cutting apparatus (10) comprising:

   a worktable (12), adapted to support the block (90) to be cut; and
   a carrier member (14), configured to carry a cutting tool (16) designed to cut said block (90), said carrier member (14) defining a cutting axis (18) for said cutting tool (16), said carrier member (14) being designed so that, when said carrier member (14) carries said cutting tool (16), at least part of said cutting tool (16) extends along said cutting axis (18);
   wherein:

      - said carrier member (14) can be tilted with respect to said worktable (12), so as to vary an angle of inclination ($\theta$) of said cutting axis (18) with respect to said worktable (12);
      - said carrier member (14) is translatable along said cutting axis (18), so as to vary an axial position (w) of said carrier member (14) along said cutting axis (18);
      - at least one of said worktable (12) and said carrier member (14) is movable along a movement direction (x1, x2) which is arranged angularly with respect to said cutting axis (18), so as to vary a distance (x) between said worktable (12) and said cutting axis (18) along said movement direction (x1, x2); and
      - at least one of said worktable (12) and said carrier member (14) is movable along a cutting direction (z1, z2) perpendicular to both said cutting axis (18) and said movement direction (x1, x2), in order to cut said block (90) along a cutting plane ($\gamma$) on which said cutting axis (18) lies.

2. The cutting apparatus (10) according to claim 1, wherein said worktable (12) is movable with respect to said carrier member (14) along said movement direction (x1, x2).

3. The cutting apparatus (10) according to claim 1, wherein said carrier member (14) is movable with respect to said worktable (12) along said cutting direction (z1, z2).

4. The cutting apparatus (10) according to any one of the preceding claims, further comprising an adjustment device (70) configured to:

   receive cutting parameters related to the block (90) to be cut; and
   adjust at least one of said angle of inclination ($\theta$), said axial position (w) and said distance (x) automatically, based on said cutting parameters.

5. The cutting apparatus (10) according to claim 4, wherein said cutting parameters comprise the parameters b, f, Hw listed below:

   b: height of a portion of material (90B) to be removed from said block (90);
   f: width of said portion of material (90B) to be removed from said block (90);
   Hw: height of said block (90).

6. The cutting apparatus (10) according to claim 4 or 5, wherein said adjustment device (70) is configured to vary said axial position (w) so as to separate said carrier member (14) from said block (90) in accordance with a preset clearance (k).

7. The cutting apparatus (10) according to claim 6, wherein said preset clearance (k) is comprised between 3 and 5 mm, said preset clearance (k) being preferably 4 mm.

8. The cutting apparatus according to any one of claims 4 to 7, wherein said adjustment device (70) is configured to vary said axial position (w) so as to minimize a length (Lk) of an excess portion (19) of said cutting axis (18).

9. The cutting apparatus (10) according to claim 8, wherein said adjustment device (70) is configured to adjust the length (Lk) of said excess portion (19) based on preset design parameters, said preset design parameters comprising in particular:

   said preset clearance (k); and
   a protrusion length (i), said protrusion length (i) expressing a maximum distance between said cutting axis (18) and a plane ($\delta$) on which a lower end (14E) of said carrier member (14) lies, said lower end (14E) being designed to face the block (90) to be cut.

10. The cutting apparatus (10) according to claim 5 and one of claims 8 and 9, wherein said adjustment device (70) is configured to vary said axial position (w) on the basis of a method comprising the following steps m1, m2 and m3:

m1: calculating an effective length (Le) of said cutting axis (18), based on:

- said parameter f; and
- said parameter b;

m2: calculating the length (Lk) of said excess portion (19), based on:

- said parameter f,
- said angle of inclination ($\theta$), and
- said protrusion length (i); and

m3: translating said carrier member (14) along said cutting axis (18), so as to leave a portion of said cutting tool (16) exposed, said exposed portion of said cutting tool (16) having a length equal to the sum of:

- the effective length (Le) calculated in step m1, and
- the length (Lk) of said excess portion (19) calculated in step m2.

*Fig. 1*

EP 4 644 026 A1

Fig.2

EP 4 644 026 A1

Fig.3

EP 4 644 026 A1

Fig.4

Fig. 5

10

24

24A

24B

16  14B

14

26

14C

14A

18, Y

12A

θ

12

Y

X

Fig. 6

Fig.7

EP 4 644 026 A1

Fig. 8

EP 4 644 026 A1

EP 4 644 026 A1

Fig.9

Fig. 10

EP 4 644 026 A1

*Fig. 11*

Europäisches
Patentamt
European
Patent Office
Office européen
des brevets

# EUROPEAN SEARCH REPORT

**Application Number**

EP 25 17 3102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 736 820 A (JUNG R) 5 June 1973 (1973-06-05) | 1,3-5, 7-10 | INV. B23D53/00 |
| Y | * column 3, line 27 - line 37; claim 1; | 2 | B23D53/02 |
| A | figures 1-3 * * column 3, line 3 - line 8 * ----- | 6 | B26D1/46 B26D3/00 B26D5/00 |
| X | IT MO20 080 334 A1 (A C M S R L) 30 June 2010 (2010-06-30) | 1-5,7-10 | B26D7/22 B26D5/02 |
| Y | * claim 1; figures 1-11; example 2 * | 2 | B26F3/12 |
| A |  | 6 |  |
| X | ----- US 11 440 110 B2 (SUBARU CORP [JP]; FUYO JITSUGYO CO LTD [JP]) 13 September 2022 (2022-09-13) | 1,3-5, 7-10 |  |
| Y | * figure 1 * | 2 |  |
| A |  | 6 |  |
| Y | ----- US 6 966 246 B2 (YEH ROGER [US]) 22 November 2005 (2005-11-22) * figure 3 * ----- | 2 |  |
| A | US 4 111 085 A (JOHNSON GEORGE WILLIAM) 5 September 1978 (1978-09-05) * figures 1, 2A-E * ----- | 1-10 |  |
| A | WO 2011/144270 A1 (GMM S P A [IT]; GUAZZONI LUIGI [IT]) 24 November 2011 (2011-11-24) * figure 1 * ----- | 1-10 |  |
| A | WO 98/14311 A1 (ESOX [FR]; SAGOT DUVAUROUX BENOIT [FR]; BESSE LOUIS [FR]) 9 April 1998 (1998-04-09) * figure 1 * ----- | 1-10 |  |
| A | DE 34 40 786 A1 (GEISS GEORG MASCHF [DE]) 10 July 1986 (1986-07-10) * figure 1 * ----- | 1-10 |  |

**TECHNICAL FIELDS SEARCHED (IPC)**

B23D
B26D
B26F

The present search report has been drawn up for all claims

| Place of search | Date of completion of the search | Examiner |
|---|---|---|
| Munich | 19 September 2025 | Orozco Gijon, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

\& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 3102

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2025

| Patent document cited in search report | | Publication date | Patent family member(s) | | Publication date |
|---|---|---|---|---|---|
| US 3736820 | A | 05-06-1973 | NONE | | |
| IT MO20080334 | A1 | 30-06-2010 | | | |
| US 11440110 | B2 | 13-09-2022 | CN | 106334836 A | 18-01-2017 |
| | | | JP | 6630073 B2 | 15-01-2020 |
| | | | JP | 2017019042 A | 26-01-2017 |
| | | | KR | 20170007182 A | 18-01-2017 |
| | | | US | 2017008102 A1 | 12-01-2017 |
| | | | US | 2020086406 A1 | 19-03-2020 |
| US 6966246 | B2 | 22-11-2005 | NONE | | |
| US 4111085 | A | 05-09-1978 | DE | 2800902 A1 | 23-11-1978 |
| | | | FR | 2390232 A1 | 08-12-1978 |
| | | | GB | 1587001 A | 25-03-1981 |
| | | | JP | S53139284 A | 05-12-1978 |
| | | | US | 4111085 A | 05-09-1978 |
| WO 2011144270 | A1 | 24-11-2011 | AU | 2011254981 A1 | 19-07-2012 |
| | | | CN | 103038012 A | 10-04-2013 |
| | | | EP | 2571651 A1 | 27-03-2013 |
| | | | IT | 1399931 B1 | 09-05-2013 |
| | | | RU | 2012152348 A | 27-06-2014 |
| | | | SM | T201400102 B | 08-09-2014 |
| | | | US | 2013055550 A1 | 07-03-2013 |
| | | | WO | 2011144270 A1 | 24-11-2011 |
| WO 9814311 | A1 | 09-04-1998 | AU | 4559797 A | 24-04-1998 |
| | | | EP | 0929385 A1 | 21-07-1999 |
| | | | FR | 2754208 A1 | 10-04-1998 |
| | | | WO | 9814311 A1 | 09-04-1998 |
| DE 3440786 | A1 | 10-07-1986 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000009922